# EUROPEAN PATENT SPECIFICATION

(11) **EP 3 049 178 B1**
(45) Date of publication and mention of the grant of the patent: **08.04.2020**
(21) Application number: 14786454.0
(22) Date of filing: 26.09.2014
(51) Int. Cl.: B01D 67/00, B01D 69/06, B01D 69/14, B01D 71/34, B01D 71/48, B01D 71/56, B01D 71/68

(54) **BICONTINUOUS MICROEMULSION POLYMERIZED COATING FOR WATER TREATMENT**
BESCHICHTUNG AUS BIKONTINUIERLICHER POLYMERISIERTER MIKROEMULSION ZUR WASSERAUFBEREITUNG
REVÊTEMENT POLYMÉRISÉ DE MICROÉMULSION BICONTINUE DESTINÉ AU TRAITEMENT DE L'EAU

(30) Priority: 27.09.2013 IT GE20130096
(43) Date of publication of application: 03.08.2016
(73) Proprietor: Hochschule Karlsruhe Technik und Wirtschaft, 76133 Karlsruhe (DE); Consiglio Nazionale Delle Ricerche, 00185 Roma (IT); Universita' Della Calabria, 87036 Rende (CS) (IT)
(72) Inventor: FIGOLI, Alberto, I-87050 Lappano (IT); HOINKIS, Jan, 76199 Karlsruhe (DE); GABRIELE, Bartolo, I-87036 Arcavata di Rende (IT); DE LUCA, Giorgio, I-87036 Rende (CS) (IT); GALIANO, Francesco, I-87020 Santa Maria del Cedro (CS) (IT); DEOWAN, Shamim Ahmed, 76137 Karlsruhe (DE)
(74) Representative: Meissner Bolte Partnerschaft mbB
(86) International application number: PCT/EP2014/070603
(87) International publication number: WO 2015/044335

(56) References cited:
- EP-A1- 0 449 450
- US-A- 5 238 992
- US-A- 5 460 872
- US-A1- 2004 028 875
- US-A1- 2009 205 116
- US-B2- 7 759 401
- RAJ W R P ET AL: "Synthesis of porous polymeric membranes by polymerization of micro-emulsions", POLYMER, ELSEVIER SCIENCE PUBLISHERS B.V, GB, vol. 34, no. 15, 1 January 1993 (1993-01-01), pages 3305-3312, XP024120680, ISSN: 0032-3861, DOI: 10.1016/0032-3861(93)90407-2 [retrieved on 1993-01-01]
- LI T D ET AL: "Hollow-fiber membranes coated with polymerizable bicontinuous microemulsions", JOURNAL OF MEMBRANE SCIENCE, ELSEVIER SCIENTIFIC PUBL.COMPANY. AMSTERDAM, NL, vol. 133, no. 2, 1 October 1997 (1997-10-01), pages 177-187, XP004092181, ISSN: 0376-7388, DOI: 10.1016/S0376-7388(97)00102-6 cited in the application
- CHIENG ET AL: "Porous polymeric membranes by bicontinuous microemulsion polymerization: effect of anionic and cationic surfactants", POLYMER, ELSEVIER SCIENCE PUBLISHERS B.V, GB, vol. 37, no. 26, 1 January 1996 (1996-01-01), pages 5917-5925, XP004070908, ISSN: 0032-3861, DOI: 10.1016/S0032-3861(96)00452-1 cited in the application
- XI ZHANG ET AL: "In Situ Gamma Ray-Initiated Polymerization To Stabilize Surface Micelles", JOURNAL OF THE AMERICAN CHEMICAL SOCIETY, vol. 126, no. 21, 1 June 2004 (2004-06-01) , pages 6572-6573, XP055161587, ISSN: 0002-7863, DOI: 10.1021/ja049431y

## Description

The present invention is directed to the production of highly hydrophilic and antimicrobial flat membranes using a synthesized surfactant which allows to prepare a polymerisable bicontinuous microemulsion (PBM) for water treatment. In particular, polymerisable bicontinuous microemulsion forms the coating material of commercial membranes. PBM coated membranes according to the invention could be successfully used for water purification in Membrane Bioreactor (MBR) applications. Other applications of PBM coated membranes according to the invention may be easily selected between microfiltration, ultrafiltration, nano-filtration, reverse-osmosis, forward-osmosis and pervaporation.

### Background of the invention

A microemulsion is a thermodynamically stable dispersion consisting of two immiscible liquids (oil and water) stabilized by a surfactant. Often a co-surfactant, usually represented by a short chain alcohol, is required for the formation of the microemulsion. The co-surfactant, in fact, along with the surfactant lowers the interfacial tension to a very small (and sometimes even negative) value.

In contrast to emulsions, microemulsions form spontaneously, they are optically transparent, thermodynamically stable, and they have smaller droplet size and a lower interfacial energy. Microemulsions are conventionally divided in three different types:
1. Oil-in-water (O/W) microemulsions: they are formed at low oil concentrations. The oil swollen micelles are dispersed in a water continuous phase
2. Water-in-oil (W/O) microemulsions: they are formed at low water concentration. The water droplets are dispersed in an oil continuous phase
3. Bicontinuous microemulsions: they are formed at balanced conditions in which the oil and the water domains are randomly dispersed in two phases giving a sponge-like structure.

At low surfactant concentrations, different multi phase equilibriums are known as Winsor systems:
1. Winsor I (O/W): surfactant-rich water phase coexisting with surfactant-poor oil phase;
2. Winsor II (W/O): surfactant-rich oil phase coexisting with surfactant-poor water phase;
3. Winsor III (bicontinuous): surfactant-rich middle phase coexisting with both water and oil poor phases.

Microemulsions can provide reaction sites for some inorganic/organic reactions and for polymerization. Nanoparticles, microlatexes and nanoporous polymeric materials can be obtained polymerizing respectively W/O microemulsions, O/W microemulsions and bicontinuous microemulsions. Microemulsions are suitable to solubilise hydrophilic and lipophilic materials that are relatively non soluble in water or organic solvents. This is due to the presence of water and oil microdomains within the same single-phase solution. Furthermore, thanks to their versatility and thermodynamic stability, microemulsions are applied in different fields such as in pharmaceutical, in cosmetics, in agrochemicals, in oil recovery, as food additive and as reaction media.

In bicontinuous microemulsion the surfactant is located at the interface between the oil and the water microdomains forming a network of interconnected water and oil channels. The oil channels can be polymerized to form the matrix of liquid membranes, while the aqueous phase remains unchanged. For this reason, the microemulsions may be used for all purposes as membranes. Their tendency to organize themselves into stable structures, depending on the initial ratio, oil / water / surfactant, allows the adjustment and the control of membrane morphology, size and pore distribution, in the range of nanometers.

The study of microemulsion properties includes different experimental approaches such as viscosity measurements, conductivity measurements, phase behaviour, static and dynamic light scattering, NMR self-diffusion.

The term microemulsion was firstly coined by Schulman et al. in 1959 to describe a multiphase system containing oil, water, surfactant and alcohol, leading to the formation of a clear solution. A quaternary solution of water, benzene, hexanol, and k-oleate was, then, prepared. The system was stable, homogenous and slightly opalescent. In the years between 1943 and 1965 Schulman and co-workers described how to prepare these transparent systems. They found that by mixing the right combination of four components (water, oil, surfactant and cosurfactant), a clear single-phase solution could be obtained.

In the 80' the polymerization of methyl acrylate (MA) in water/oil systems (W/O) opened this field to an increasing number of investigations and many works were published on polymeric membranes obtained by microemulsion polymerization using both polymerisable and non-polymerisable surfactants.

Gan et al., for instance, studied the polymerization of methyl methacrylate (MMA) using different types of polymerisable and non polymerisable surfactants. Microporous polymeric transparent materials were, thus, obtained and characterized. The zwitterionic surfactant *(Acryloyloxyundecyldimethylammonio) acetate* (AUDMAA), the anionic surfactant *11-(N-ethylacrylamido)undecanoate* (Na11-EAAU) and the nonionic surfactant ω-methoxy poly(ethylene oxide)₄₀ undecyl-α-methacrylate (PEO-R-MA-40) were applied in three different works to prepare bicontinuous microemulsions using different chemical concentrations. The differences among polymerisable and non polymerisable surfactants were also investigated. The anionic surfactant sodium dodecyl sulphate (SDS) and the cationic surfactants of *n-alkyltrimethylammoniumbromide (CₙTAB)* allowed to obtain opaque polymer composites with different structures. The effect of the alkyl chain length of CₙTAB (n=12, 14 and 16) was evaluated and its great effect on bicontinuous microemulsion structure was found. Increasing the length of the alkyl chain (from C12 to C16), in fact, the morphology of polymerized microemulsions varied from a globular shape to a worm-like microstructure. The microstructure presented a dimension ranging from a few hundred nanometers to a few micrometers as the alkyl chain length was increased. This was probably related to the stronger interactions established by C₁₆TAB with the thicker hydrophobic layer that limited the formation of fluid interfacial films. On the contrary, when a surfactant with a shorter alkyl chain was used, such as C₁₂TAB, the formation of more fluid interfacial films led to a globular microstructure. The above mentioned non-polymerisable surfactants were suitable to obtain open-cell microstructures even if the prepared composites were not transparent but opaque. For this reason, in order to obtain transparent latexes, polymerisable surfactants such as sodium 11-(N-ethylacrylamido)-undecanoate (SEAAU), acryloyloxyundecyltrimethyl ammonium chloride or bromide (AUTMAC or AUTMAB), AUDMAA and (PEO-R-MA-ₙ) were applied. The produced polymer composites were indicated to have a promising application in the field of liquid separation as selective membranes. By adjusting, in fact, the composition of the microemulsion, the permeability of the membranes could be controlled.

When polymerisable surfactants are used to prepare the microemulsion, as shown above, all the components are polymerisable. After the polymerization, in fact, the surfactant results in chemically bonded to the membrane matrix enhancing the hydrophilicity of the overall membrane.

As reported in literature, cationic and anionic surfactants are generally the most used surface active-agents. Chieng et al. produced porous polymeric membranes using the anionic SDS and the cationic dodecyltrimethylammonium bromide (DTAB) surfactants.

Membranes obtained with SDS showed higher opacity when compared to membranes prepared with the cationic surfactant DTAB indicating the larger pore size of the former ones, from 100 nm to 3 µm. DTAB, on the contrary, allowed to obtain transparent membranes with a smaller pore size, less than 100 nm, and, furthermore, it showed a better efficiency in stabilizing the copolymers particles of MMA and of 2-hydroxyethyl methacrylate (HEMA), used as cosurfactant, due to surfactant strong interactions with them.

Burban et al. used a double-chained surfactant, didodecyldimethylammonium bromide (DDAB), for the polymerization of MMA and silica gels eliminating the employment of a cosurfactant that was normally applied for microemulsion preparation.

Bicontinuous microemulsions were, also, successfully used to prepare hollow-fiber membranes by coating and polymerizing them on to the fiber internal surface. Li et al. used bicontinuous microemulsion to coat pre-fabricated *polyethersulfone*/*diethylene glycol*/*N-methyl-2-pyrrolidone* (PES/DES/NMP) hollow-fiber membranes of different pore size by in situ polymerization. Prepared coated hollow-fiber membranes showed different performances on polyethylene glycol (PEG) separation and permeation that was found to be strongly depended on the composition of the bicontinuous microemulsion precursors.

Over the past decades an increasing interest was devoted to microemulsion application as reaction media, for polymerization and enzymatic reactions, and as drug delivery systems. Microemulsion polymerization, however, remains one of the most active field in microemulsion application. In 2001 Capek, in his paper "Microemulsion polymerization of styrene in the presence of a cationic emulsifier", Adv in Coll and Interf Sci (2001) 92, 195-233, discussed about the radical polymerization of styrene in the three and four component microemulsions stabilized by a cationic surfactant. Polymerization in the o/w microemulsion was defined as a new polymerization technique which allowed to prepare polymer latexes with a very high particle interface area and narrow particle size distribution. Stromberg et al., J of Electroanal Chem (2003) 547, 125-133, studied the electropolymerization of 3,4-ethylenedioxythiophene (EDOT) from a highly concentrated bicontinuous microemulsion using a nonionic surfactant and Lim et al., J of Memb Sci (2007) 290, 146-152, produced a proton exchange membrane by bicontinuous microemulsion photo-polymerization.

During the last years bicontinuous microemulsions started to play an increasing important role as drug delivery systems. Krauel et al. used different structure types of microemulsion for the preparation of nanoparticles by interfacial polymerization. Nanoparticles were prepared by selecting w/o droplet, bicontinuous- or solution-type microemulsions with ethyl-2-cyanoacrylate. Morphology of the particles and entrapment of the water-soluble model protein ovalbumin was investigated. This study clearly showed how the entrapment of proteins was dependent on the amount of the monomer used. The advantage of using bicontinuous microemulsion laid in having a larger aqueous fraction and in the possibility to entrap bigger amounts of proteins although entrapment efficiency was lower than w/o droplet and solution-type microemulsion.

Graf et al., Europ J of Pharm Sci (2008) 33, 434-444, studied poly(alkylcyanoacrylate) nanoparticles based on microemulsions for insulin controlled release. Even in this case a low entrapment efficiency of the peptide in the nanoparticles was observed that could be compensated by administering a higher dose of the formulation.

US 7 759 401 discloses the production of nanoporous and microporous solvogels and nanolatexes by microemulsion polymerization stabilized by reactive ionic liquid surfactant. The microemulsiuon is polymerized to form a composite material.

Polymeric membranes lead the membrane separation industry market because they are very competitive in performance and economics. Many polymers are available, but the choice of membrane polymer is not a trivial task. A polymer has to have appropriate characteristics for the intended application. The polymer sometimes has to offer a low binding affinity for separated molecules (as in the case of biotechnology applications), and has to withstand the harsh cleaning conditions. It has to be compatible with chosen membrane fabrication technology. The polymer has to be a suitable membrane former in terms of its chains rigidity, chain interactions, stereoregularity, and polarity of its functional groups. The polymers can form amorphous and semicrystalline structures (can also have different glass transition temperatures), affecting the membrane performance characteristics. The polymer has to be obtainable and reasonably priced to comply with the low cost criteria of membrane separation process. Many membrane polymers are grafted, custom-modified, or produced as copolymers to improve their properties. The most common polymers in membrane synthesis are cellulose acetate, nitrocellulose, and cellulose esters (CA, CN, and CE), polysulfone (PS), polyether sulfone (PES), polyacrilonitrile (PAN), polyamide (PA), polyimide (PI), polyethylene and polypropylene (PE and PP), polytetrafluoroethylene (PTFE), polyvinylidene fluoride (PVDF), polyvinylchloride (PVC), polyetheretherketone (PEEK).

One of the critical characteristics of a synthetic membrane is its chemistry. Synthetic membrane chemistry usually refers to the chemical nature and composition of the surface in contact with a separation process stream. The chemical nature of a membrane surface can be quite different from its bulk composition. This difference can result from material partitioning at some stage of the membrane's fabrication, or from an intended surface postformation modification. Membrane surface chemistry creates very important properties such as hydrophilicity or hydrophobicity (related to surface free energy), presence of ionic charge, membrane chemical or thermal resistance, binding affinity for particles in a solution, and biocompatibility (in case of bioseparations). Hydrophilicity and hydrophobicity of membrane surfaces can be expressed in terms of water (liquid) contact angle θ. Hydrophilic membrane surfaces have a contact angle in the range of 0°<θ<90° (closer to 0°), where hydrophobic materials have θ in the range of 90°<θ<180°.

The contact angle is determined by solving the Young's equation for the interfacial force balance. At equilibrium three interfacial tensions corresponding to solid/gas (γSG), solid/liquid (γSL), and liquid/gas (γLG) interfaces are counterbalanced. The consequence of the contact angle's magnitudes is known as wetting phenomena, which is important to characterize the capillary (pore) intrusion behavior. Degree of membrane surface wetting is determined by the contact angle. The surface with smaller contact angle has better wetting properties (θ=0°-perfect wetting). In some cases low surface tension liquids such as alcohols or surfactant solutions are used to enhance wetting of non-wetting membrane surfaces. The membrane surface free energy (and related hydrophilicity/hydrophobicity) influences membrane particle adsorption or fouling phenomena. In most membrane separation processes (especially bioseparations), higher surface hydrophilicity corresponds to the lower fouling. Synthetic membrane fouling impairs membrane performance. As a consequence, a wide variety of membrane cleaning techniques have been developed. Sometimes fouling is irreversible, and the membrane needs to be replaced. Another feature of membrane surface chemistry is surface charge. The presence of the charge changes the properties of the membrane-liquid interface. The membrane surface may develop an electrochemical potential and induce the formation of layers of solution particles which tend to neutralize the charge.

Two types of synthetic membranes are commonly used in separation industry: dense and porous symmetric (isotropic) membranes, and dense and porous asymmetric (anisotropic) membranes. Dense and porous membranes are distinct from each other based on the size of separated molecules. Dense membrane is usually a thin layer of dense material utilized in the separation processes of small molecules (usually in gas or liquid phase). Dense membranes are widely used in industry for gas separations and reverse osmosis applications. Dense membranes can be synthesized as amorphous or heterogeneous structures. Polymeric dense membranes such as polytetrafluoroethylene and cellulose esters are usually fabricated by compression molding, solvent casting, and spraying of a polymer solution. The membrane structure of a dense membrane can be in a rubbery or a glassy state at a given temperature depending on its glass transition temperature. Porous membranes are intended on separation of larger molecules such as solid colloidal particles, large biomolecules (proteins, DNA, RNA) and cells from the filtering media. Porous membranes find use in the microfiltration, ultrafiltration, and dialysis applications.

Prior art membrane present the difficulty of properly tuning the pore sizes. Different pore size allows the application of membranes with different pore size in several membrane processes (microfiltration, ultrafiltration and nanofiltration in water filtration, membrane bioreactor, forward osmosis).

Traditional membranes, which do not show an intrinsic antimicrobial activity, suffer low-self-cleaning capacity, high fouling and biofouling phenomenon, which all together decrease the lifecycle of the traditional membrane in water purification processes and increase the costs. Traditional membranes show variable water permeability in time and adsorption of organic compounds. This side effects decrease the efficiency and the durability of the membrane. Membrane bioreactor (MBR) technology is a combination of the conventional biological sludge process, a wastewater treatment process characterised by a suspended growth of biomass, with a micro- or ultrafiltration membrane system. The MBR offers the advantage of higher product water quality and low footprint. Due to its advantages, membrane bioreactor technology has great potential in wide ranging applications including municipal and industrial wastewater treatment and process water recycling. Yet, several technical barriers exist which reduce the overall robustness of the MBR technology.

Membrane fouling is regarded as the most important bottleneck for further development of MBR technology. It is the main limitation to faster development of this process, particularly when it leads to flux losses that cleaning cannot restore.

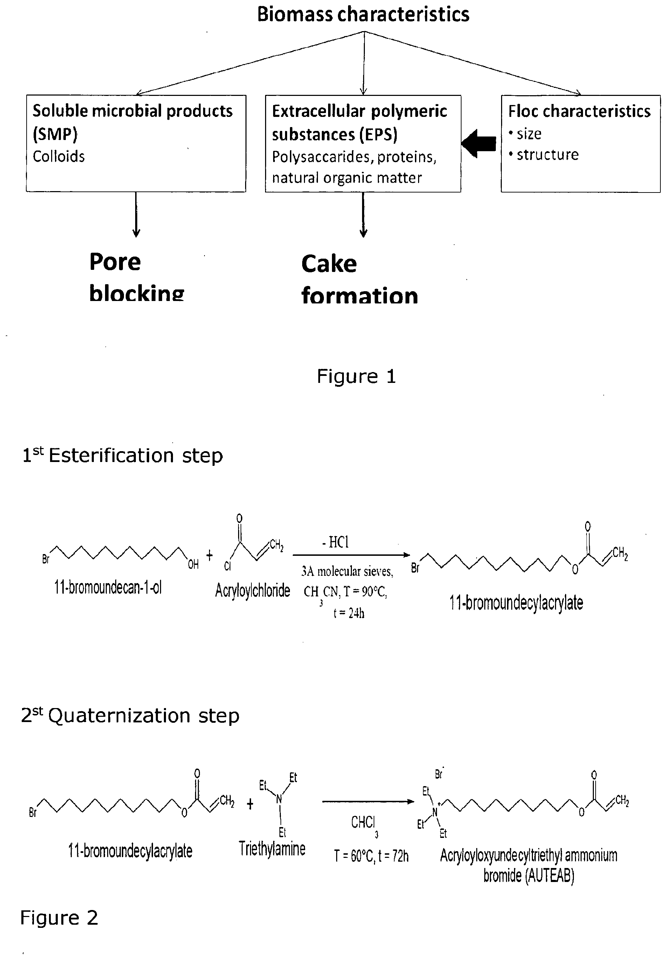

Generally, membrane fouling can be caused by a variety of constituents such as bacteria, suspended solids, colloids as well as dissolved inorganic and organic compounds. In MBRs, fouling can be attributed to pore blocking (deposition within the pores) or to cake layer formation on the membrane surface (Fig. 1). Colloidal and soluble foulants (SMP) can cause pore blocking and irreversible fouling due to their small size.

In many cases, the accumulation of a filter cake is the main fouling mechanism. It has been reported that cake resistance was the major contributor to the resistance of a membrane coupled with an activated sludge system, particularly under low sludge age conditions. Fouling of polymer membranes is influenced by membrane chemistry and morphology. In the porous membranes, the polymers used have chemical and mechanical stability, but are generally hydrophobic in nature, and as a consequence are highly prone to adsorption of organic foulants like extracelluar polymeric substances (EPS).

With increased tendency to fouling, the MBR filtration performance inevitably decreases with filtration time. Membrane fouling is the most serious problem affecting system performance as it leads to a significant increase in hydraulic resistance, resulting in a decline of permeates flux. Also, an increase of transmembrane pressure (TMP) occurs under constant-flux conditions. As a consequence, laborious membrane cleaning or even replacement of several components is required, increasing maintenance and operating costs of the MBR significantly.

Due to use of MF and "loose" UF membranes (molecular weight cut-off typically > 100 kD) state-of-the art MBR membranes offer only low rejection of micropollutants with low molecular weight such as e.g. endocrine disrupters, pharmaceuticals, industrial dyestuff etc. Therefore, application of state-of-the art MBR technology of wastewater treatment as single- step process is rather limited in this sector and typically requires downstream posttreatment such as e.g. NF or activated carbon treatment.

US 5,460,872 A discloses a process for coating microporous substrates and products therefrom, in which process an aqueous colloidal dispersion of submicron size polymer particles is used to coat the internal structure that defines the pores of the microporous substrates.

W. R. Palani Raj et al., POLYMER, 1993, vol. 34, no. 15, pages 3305 to 3312, discloses a synthesis of porous polymeric membranes by polymerization of micro-emulsions.

US 5,238,992 A discloses a process for preparing solid polymer blends and composites of controlled porosity in microemulsions containing both hydrophilic and hydrophobic phases.

### Summary of the invention

There is the need of producing enhanced membranes directed to solve the problem posed. The invention concerns a highly hydrophilic and antimicrobial flat membrane and a method thereof according to claims 1 and 9.

The highly hydrophilic and antimicrobial flat membrane according to the invention comprises a polymeric membrane, and a polymerized coating obtained thereof by polymerization of a cast layer of a polymerisable bicontinuous microemulsion. The polymerisable bicontinuous microemulsion (PBM) comprises a oil phase monomer, a surfactant, a cosurfactant, water, a cross-linker and an initiator.

According to the invention the surfactant is one or more surfactants of general formula 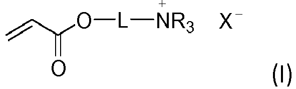 wherein:
- L: is a carbon chain (CH₂)ₙ linker with n ranging from 2 to 20;
- R: is an alkyl group;
- X: is Cl, Br, or I or a mixture of halogens.

The polymeric membrane is selected from the group of polymeric membrane polyamide (PA), polyethersulphone (PES), polyvinylchloride (PVC), polyetheretherketone (PEEK), polysulphone (PS), polyethylene terephthalate (PET) and polyvinyldene fluoride (PVDF). Preferably, the polymeric membrane is polyethersulphone (PES).

The oil phase monomer of the polymerized coating of a polymerisable bicontinuous microemulsion is selected from the group of organic monomers able to undergo radical polymerization, namely styrene, acrylonitrile, or acrylates. Preferably, the monomer is methyl methacrylate (MMA).

The hydrophilicity of the membrane surfaces can be expressed in terms of a water (liquid) contact angle θ being in the range of 0°<θ<90°.

According to a preferred embodiment of the invention the surfactant is acryloyloxyundecyltriethylammonium bromide surfactant (AUTEAB) of formula:

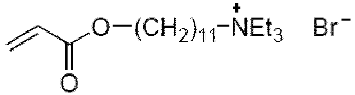

The invention is further directed to a method of producing a surfactant compound of claim 1 formula 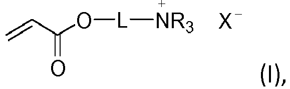 which method is defined in claim 9.

Further preferred embodiments of the invention are claimed in the appended dependent claims.

### Brief description of the Drawings

Fig. 1 shows the biomass characteristics and biofouling.
Fig. 2 Scheme of the synthesis of new polymerisable surfactant AUTEAB
Fig. 3 IR and NMR of the new polymerisable surfactant AUTEAB
Fig. 4. Antimicrobial activity of a) Surfactant AUTEAB and b) PES and PBM coated membrane
Fig. 5 shows the schematic Gibbs triangle displaying self-assembled structure forming in microemulsions stabilized by a strong amphiphile.
Fig. 6 shows the separation mechanism of PBM coated membranes according to the invention.
Fig. 7a and 7b show the microemulsion characterization in term of electrical conductivity for two different surfactants
Fig. 8a and 8b report SEM and AFM analyses of PES and PBM coated membrane
Fig. 9 reports the contact angle measurement of PES commercial and PBM coated membrane
Fig. 10 refers to dye rejection tests with PES commercial and PBM coated membrane
Fig. 11 refers to salt rejection tests with PES commercial and PBM coated membrane
Fig. 12a reports water permeability of nanostructured PBM membrane compared to commercial PES membrane
Fig. 12b shows regain of water permeability with PES commercial and PBM coated membrane applied with model foulant humic acid (HA)
Fig. 13 shows micrographs of fouling (HA) attachment in PBM membrane compared to commercial PES membrane
Fig.-14 shows micrographs of textile dyes attachment in PBM membrane compared to commercial PES membrane

### Detailed description of the embodiments

The present invention relates to the preparation of composite membranes by using a commercial membrane as support coated with a polymerized bicontinuous microemulsion. A microemulsion is, in fact, cast on a membrane support and it is left to polymerize under nitrogen atmosphere in order to obtain a supported membrane coated with a polymerized bicontinuous microemulsion.

The membranes that can be used as support for PBM coating are made of commercial polymers, such as: polyamide (PA), polyethersulphone (PES), polysulphone (PS), polyethylene terephthalate (PET) and polyvinyldene fluoride (PVDF), etc.

The bicontinuous microemulsion consists of an oil phase and an aqueous phase stabilized by the presence of a surfactant.

The microemulsion composition is constituted by:
- a oil phase monomer;
- a cosurfactant;
- water, used for the aqueous phase of the microemulsion;
- a surfactant used to lower the surface tension of the microemulsion facilitating the wetting of surfaces or the miscibility among different liquids;
- a cross-linker;
- an initiator.

Example of oil phase monomer suitable for the microemulsion are oil phase organic monomers able to undergo radical polymerization, such as styrene, acrylonitrile, or acrylates. In a preferred embodiment of the invention, the monomer is methyl methacrylate (MMA). Example of cosurfactant suitable for the microemulsion are:
Acrylates functionalized with a hydrophilic functional group, such as 2-hydroxylethyl methacrylate (HEMA). All the other organic monomers able to undergo radical polymerization, functionalized with a hydrophilic functional group, could in principle be used. A surfactant suitable for lowering the surface tension of the microemulsion and facilitating the wetting surfaces or the miscibility among different liquids is according to the invention one or more surfactants of general formula 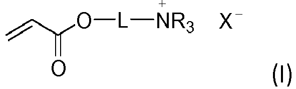 wherein:
L is a carbon chain linker;
R is an alkyl group;
X is Cl, Br, or I or a mixture of halogens.

The preferred surfactant according to a preferred embodiment of the invention is the acryloyloxyundecyltriethylammonium bromide (AUTEAB) of formula

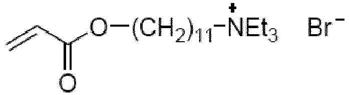

Other surfactants bearing a polymerisable end linked through an organic linker (either hydrophobic or hydrophilic) to a polar head (such as an ammonium or a phosphonium moiety) could in principle be used.

Example of cross-linkers are:
ethylene glycol dimethacrylate (EGDMA). All molecules bearing two polymerisable ends linked by an organic linker (either hydrophobic or hydrophilic) could in principle be used. Example of redox initiators are:
Any molecule able to act as a radical initiator, such as ammoniumpersulfate (APS) and *N,N,N',N'*-tetramethylethylenediamine (TMEDA), or UV-based initiators such as azobisisobutyronitrile (AIBN), 2,2-dimethoxy-2-acetophenone (DMPA), dibenzyl Ketone (DBK and organic peroxides, like dibenzoyl peroxide (BP) could in principle be used..

The preparation of PBM membranes was carried out according to literature data.

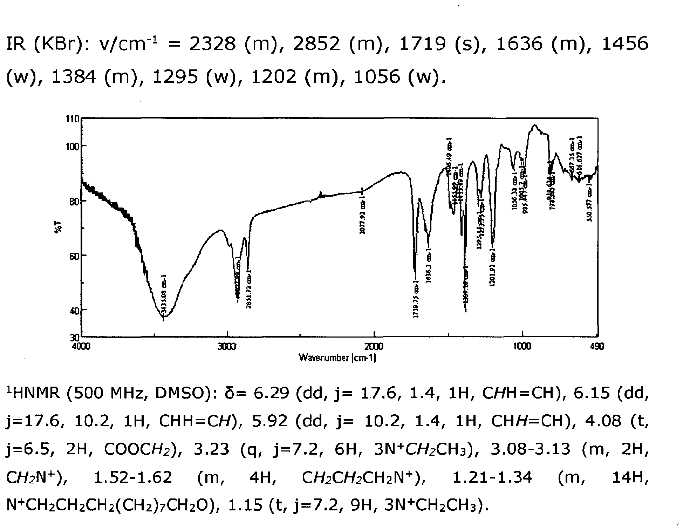

The zwitterionic surfactant acryloyloxyundecyltriethyl ammonium bromide (AUTEAB) was synthesized, see Fig. 2, and used for bicontinuous microemulsion preparation. AUTEAB has been synthesized by following a two-step procedure:

### 1° step: Esterification:

Acryloyl chloride (2.26 g, 24.9 mmol) was dissolved in anhydrous CH3CN (110 ml) under nitrogen atmosphere and added to a stirred solution of 11-bromoundecanol (5 g, 19.9 mmol). 3A molecular sieves (4.3 g) and 0.13 mmol of the radical inhibitor 2,6-di-tert-butyl-4-methylphenol were also added to the solution under nitrogen atmosphere. The solution was stirred for 24h at 90°C. After cooling, the mixture was filtered in order to remove molecular sieves, the solvent was removed by vacuum and the product was purified by column chromatography (silica 41 gel, hexane: ethyl acetate 9:1). Yield: 5.35 g (17.5 mmol); 88% based on starting 11-bromo-1-undecanol.

### 2° step: Quaternization

11-bromoundecylacrylate was dissolved in anhydrous chloroform (8 mL) under nitrogen atmosphere. Tryethylamine (1.96 g, 19.4 mmol) was added to the mixture and then the solution was stirred for 72h at 60°C. After cooling, the solution was filtered and under stirring diethyl ether (80 mL) was added dropwise. The resulting white precipitate was filtered and washed with diethyl ether. Yield: 4.74 g (11.7 mmol); 67% based on starting 11-bromoundecylacrylate.

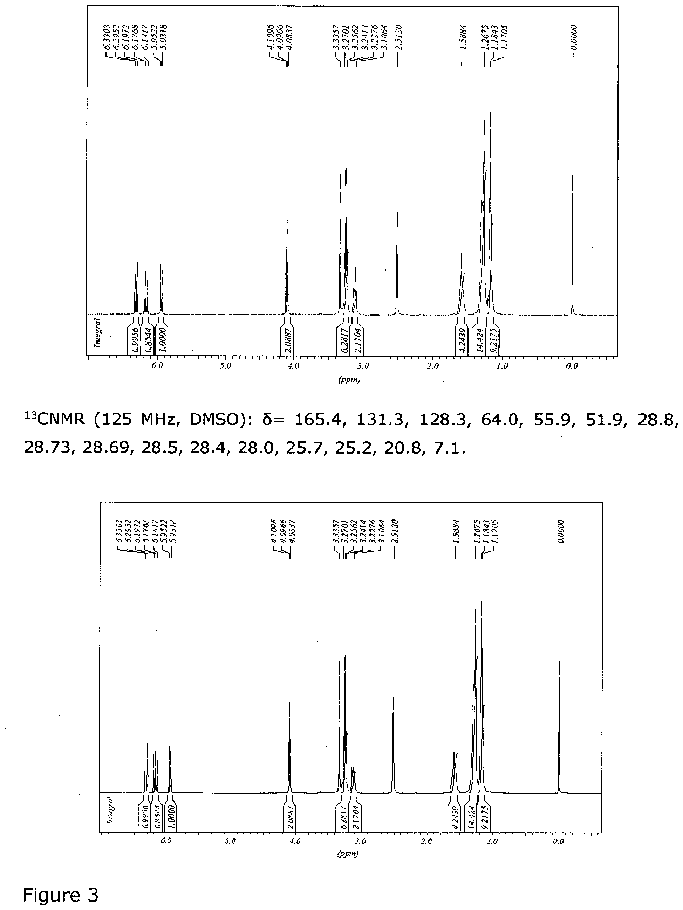

Characterizations tests (NMR and IR) confirmed that the synthesis of AUTEAB polymerisable surfactant was successful as shown in FIGURE 3.

According to a preferred embodiment the quaternization step occurs in the presence of a source of iodide anions in the form of alkaline iodide, preferably of KI.

According to a further preferred embodiment the acryloyloxyundecyltriethylammonium bromide surfactant (AUTEAB) partially exchanges the Br- anion with an anionic charged nanoparticle (ACN) to give an acryloyloxyundecyltriethylammonium-ACN complex (AUTEA-ACN) by reacting AUTEAB with the ACN in water or in another polar organic solvent followed by precipitation of the AUTEA-ACN complex with a low-polar organic solvent.

The ACN is selected between supramolecular functionalized organic compounds, such as carbon functionalised nanotubes (CNTs), functionalized cyclodextrins (CDs), calixarenes, polyoxometalates (POMs) and the polar organic solvent is preferably an alcohol and the low-polar organic solvent is preferably a hexane or diethyl ether.

Every other commercial polymerisable surfactant such as AUDMAA or AUTMAB can be used for bicontinuous microemulsion formulation.

The main advantages of this new synthesised surfactant (AUTEAB) are:
1. Reduced cost (about 4 times lower than AUTMAB);
2. Easier way to produce it (liquid tryethylamine is used instead of the gaseous methylamine).

By looking in detail at the cost estimations (reported in Table 1) related to the synthesis of either surfactants, a clear difference in price can be noted. The cost of synthesising the AUTEAB surfactant was, in fact, about 4 times lower than AUTMAB. The costs have been further decreased avoiding the use of the column for purifying the surfactant produced. Antibacterial tests have been also performed on both the new polymerisable surfactant AUTEAB and the PBM membrane prepared with AUTEAB. These tests were started by preparing growth media using Mueller-Hinton broth and agar. Antimicrobial activity tests were carried out at Izmir Institute of Technology, Turkey.

**Table 1. Comparison of cost analysis of AUTMAB and novel polymerisable surfactant AUTEAB**

| **BU (11-Bromo-1-undecanol) (cost, €)** | **Acryloyl chloride (cost, €)** | **Et₃N (TEA) (cost, €)** | **BUA (11-Bromoundecylacrylate)** | **Me₃N (TMA) (cost, €)** | **AUTMAB (total cost, €)** |
|---|---|---|---|---|---|
| 100 g (€23480) | 111.8 g (€ 174.80 quant. 200g) | 51 g (€ 21.60 - quant. 1L) | 64 g | 155 g (€ 124.20) | 28.7 g (€555.40) |

| **BU (11-Bromo-1-undecanol) (cost, €)** | **Acryloyl chloride (cost, €)** | **Molecular sieves 3A (cost, €)** | **BUA (11-Bromoundecylacrylate)** | **Et₃N (TEA) (cost, €)** | **AUTEAB (total cost, €)** |
|---|---|---|---|---|---|
| 100 g (€ 234.80) | 111.8 g (€ 174.80 quant. 200g) | 86 g (€ 26.30-quant. 250g) | 107 g | 39,1 g (€ 21.60-quant. 1L) | 94.7 g (€ 457.50) |

| | | | | | |
|---|---|---|---|---|---|
| **Cost analysis based on Sigma-Aldrich Catalogue* | | | | | |

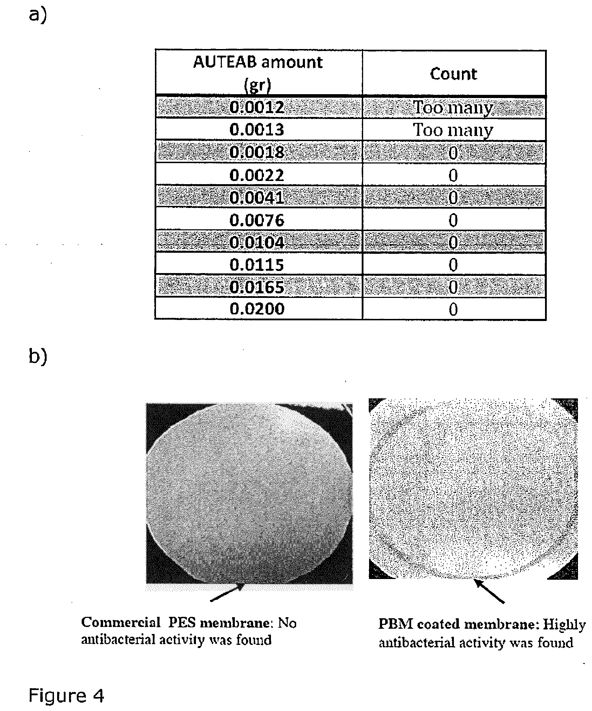

Based on its molecular structure, AUTEAB is a cationic surfactant with a quaternary ammonium group. It is well known in literature that quaternary ammonium salts have an important antimicrobial activity. Since the activity of quaternary ammonium salts is well known against gram-positive bacteria such as S. Aureus, the activity of AUTEAB surfactant was tested against the gram-negative bacterium E. Coli. From antimicrobial tests carried out on the surfactant AUTEAB (FIGURE 4a NEW), it was seen that 1.8 mg of surfactant was enough to inhibit the growth of E. Coli. However, a lower surfatant quantity (1.3 mg) was not enough to inhibit the bacterial growth and this has to be taken account once the PBM membrane is produced.

The antimicrobial activity of AUTEAB against the bacterium E. Coli was maintained even after the polymerisation of the microemulsion to form the final membrane. The results of the antimicrobial tests of the PES and coated PBM membrane are show in FIGURE 4b. The PBM coated membranes had a strong antimicrobial activity while (no bacterial growth was observed on the surface of the membrane), on the contrary PES, commercial membrane did not show any antimicrobial activity.

The antimicrobial properties of the new membranes are of primary importance when membranes are applied in such processes as membrane bioreactors (MBR), where a population of bacteria is in contact with the membrane surface. Their adhesion and growth on the membrane surface can cause the so-called "biofouling", which is responsible for the decline of membrane performances. For this reason, a membrane with antimicrobial activity can operate at a higher and more constant flux for a longer period of time.

In order to further increase the properties of the PBM coating membrane, to be not a merely a physical barrier, as the commercial UF membrane, reactive or antimicrobial fillers has been bind to the novel synthesised surfactant AUTEAB to convert toxic compounds into not toxic, or other polymerisable surfactant such as AUDMAA, for making a reactive functionalized layer. So the PBM coating membrane is an ideal matrix for incorporation of nano scale materials due to possibility of bounding them to the polymerised surfactant.

According to a preferred embodiment, the range in which bicontinuous microemulsion structure typically found was: 15-30 wt% cationic surfactant; 10-30 wt% MMA; 5-15 wt% HEMA; 25-60 wt% H₂O and 3-4 wt% EGDMA. Redox initiators such as ammoniumpersulfate (APS) and N,N,N',N'- tetramethylethylenediamine (TMEDA) or UV-based initiators such as azobisisobutyronitrile (AIBN) or 2,2-dimethoxy-2-acetophenone (DMPA) were added to the microemulsion in order to promote the polymerization.

By varying microemulsion composition, different membranes, with different morphologies, can be obtained (as shown in Table 2).

**Table 2. Tuning membrane morphology by varying microemulsion composition**

| **Membrane** | **HEMA (wt%)** | **Water permeability (L/m² h bar)** | **Dye rejection (%)** | |
|---|---|---|---|---|
| | | | Remazol Blue | Acid Red |
| PBM 1 | 30 | 126 | 61 | 23 |
| PBM 2 | 40 | 260 | 24 | 6 |
| PBM 3 | 50 | 376 | 24 | 2 |

Different PBM structures, obtained by varying microemulsion composition, affect water permeability and dye rejection. At higher water permeability, dye rejection was lower suggesting a looser structure of PBM membrane. On the contrary, high dye rejections are coupled with lower water permeability due to the denser structure of polymerized microemulsion.

### PBM PREPARATION

Once the microemulsion was prepared by mixing the monomer, water, surfactant, cosurfactant and cross-linker, initiators were added to the system.

According to a preferred embodiment, nanoparticles or catalysts were added to the system. Nano-scale materials such as nano-catalysts, supramolecular compounds can, in fact, be binded to the polymerisable surfactant AUTEAB. The microemulsion was, then, purged with nitrogen gas for about 0.5 -2 minute, preferably 1 minute.

The microemulsion was cast on a membrane in a chamber under nitrogen atmosphere at a temperature between 10-30 °C, preferably about 20°C.

Suitable membranes according to the invention could be selected from the group of PES, PS, PAN, PEEK, PVC, PVDF, PI, PA, PE, PP, PTFE, CA, CN, CE.

In the present example of preparation, the microemulsion was purged with nitrogen gas for about 1 minute and then it was cast on PES membrane in a chamber under nitrogen atmosphere at 20°C. PBM coating thickness can be modulated by varying casting knife gap and microemulsion viscosity. A microemulsion with a lower viscosity, for instance, will penetrate easily through membrane porous support polymerizing inside and causing the partial occlusion of the pores. On the contrary, a microemulsion with a higher viscosity will coat membrane surface without infiltrations in the inner section.

Microemulsion was cast using a casting knife of 150 - 350 µm and it was left to polymerize overnight under nitrogen atmosphere. The PBM coating was clearly visible on membrane surface and its thickness was measured after polymerization and it was about 4-9 µm.

In the present example a 250 µm microemulsion was cast and it was left to polymerize overnight under nitrogen atmosphere. The membrane was clearly visible on membrane surface and its thickness was measured after polymerization and it was about 5-7 µm.

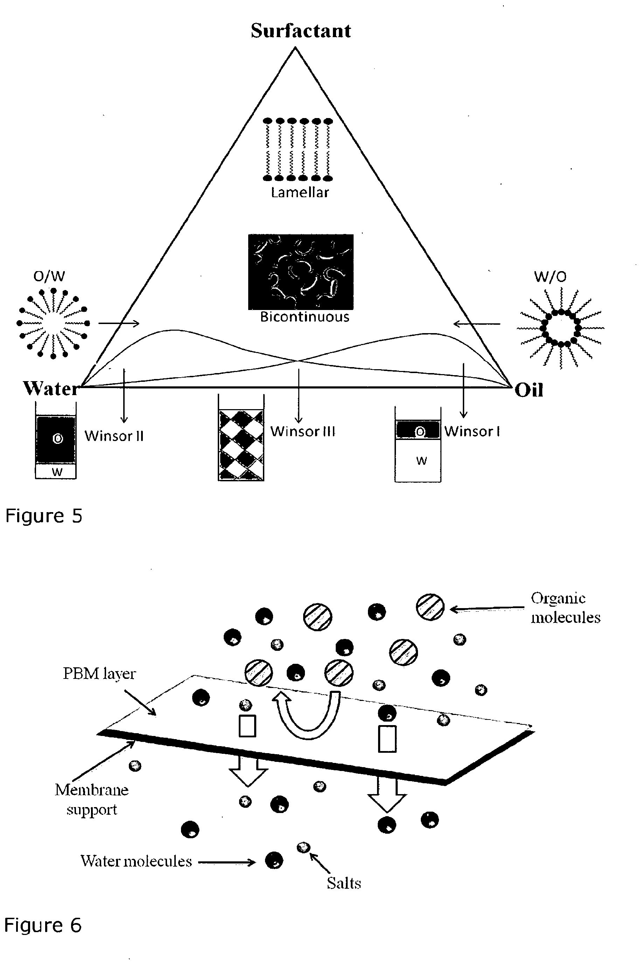

By varying the ratio of the components constituting the microemulsion (water, oil surfactant and cosurfactant) it is possible to control membrane morphology as, for example, size and pore distribution. Fig. 5 is the schematic Gibbs triangle displaying self-assembled structures forming in microemulsion stabilized by a strong amphiphile close to its balanced states.

As it can be seen from figure 5, at high oil concentration, reverse micelles capable of dissolving water molecules are formed. W/O microemulsions are formed in consequence of the further addition of water to the system. Water exists in the oil phase as droplets surrounded by the surfactant molecules.

Upon further dilution with water, a liquid crystalline region may be observed with the formation of surfactant double layers (lamellar structure). Finally, as amount of water increases, water forms a continuous phase containing droplets of oil stabilized by surfactant molecules (O/W microemulsions). The bicontinuous microemulsion forms in the middle phase, which is in equilibrium with almost pure water and oil phases.

At low surfactant concentrations Winsor phase equilibria can be distinguished: Winsor I (O/W), Winsor II (W/O) and Winsor III (bicontinuous microemulsion).

The coated membranes according to the invention can be advantageously applied for water purification and water treatment. A preferred use of the membranes according to the invention is the removal of dyes that can be encountered in textile wastewater. Nowadays textile industries are one of the main responsible of water usage and pollutants production related to the manufacturing processes. These pollutants are generally represented by salts and organic compounds; the main components of the dyes, heavy metals and suspended solids.

The MBR experiment with PBM coated membranes carried out for 6 months indicates the higher durability and higher process performance of the membrane. The high quality permeate (containing less COD and less dye) was produced by PBM coated membrane compared to the commercial membrane. The durability of the PBM coated membrane in MBR application was very high since no membrane replacement was needed for 6 months experiment with PBM coated MBR module where 2 times of membrane replaced was needed for the similar experimental period with commercial MBR module. After 6 months of experiments with PBM coated MBR module, experimentally it was found that the antimicrobial activity still exists by the used PBM MBR module. This finding indicates that PBM coated membrane shows strong antimicrobial effect with high durability.

Fig. 6 shows the separation mechanism of the prepared membranes according to the invention. The membrane support coated by a polymerized microemulsion rejects the larger organic molecules of the dye and allows the passage of the water and dissolved salts. Therefore it could be applied preferably in MBRs. The polymerized microemulsion forms a net of micro or nanochannels, as shown in figure 6, which allows the passage of the water and salts, but rejects the organic molecules which are larger in size. This depends on the ratio between mean pore size of coating and organic molecule size/dimension. In turn, the mean coating pore size depends on the preparation technique: type and concentration of components, preparation time and temperature. Different coating with pore sizes ranging between 10 nm and 0.2 micron can be prepared in according to the class of molecules to be separated.

To find the optimal microemulsion composition range, microemulsions were investigated in terms of conductivity measurements with AUTEAB and DTAB surfactants.

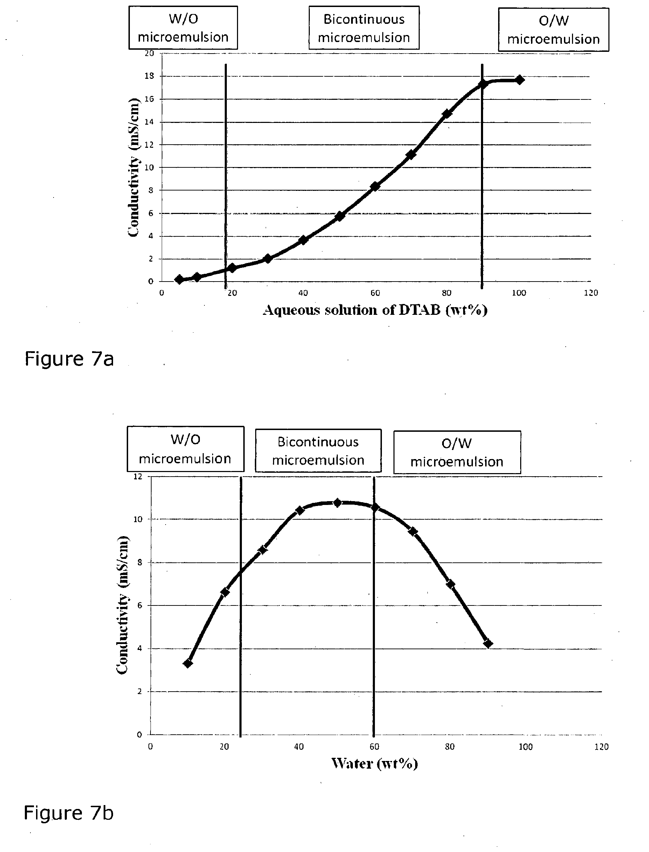

Fig 7a and 7b illustrate the microemulsion characterization in terms of electrical conductivity In case of DTAB, as shown in figure 7a, the bicontinuous range in the microemulsion was found between 20-90 wt% water content.

In case of AUTEAB, used as surfactant, the bicontinuous range in the microemulsion was found between 30-60 wt% water content, as shown in figure 7b.

Conductivity measurements allowed to differentiate the solution type microemulsions (W/O and O/W microemulsions) from bicontinuous microemulsions. Systems with a low conductivity (less than 2 mS/cm for DTAB and less than 8 for AUTEAB) designated W/O microemulsions. Upon addition of water an increase in conductivity was found (bicontinuous range). Further addition of water brought the conductivity to stabilize reaching a plateau (figure 7a) or to decrease (figure 7b) designating the O/W microemulsion formation.

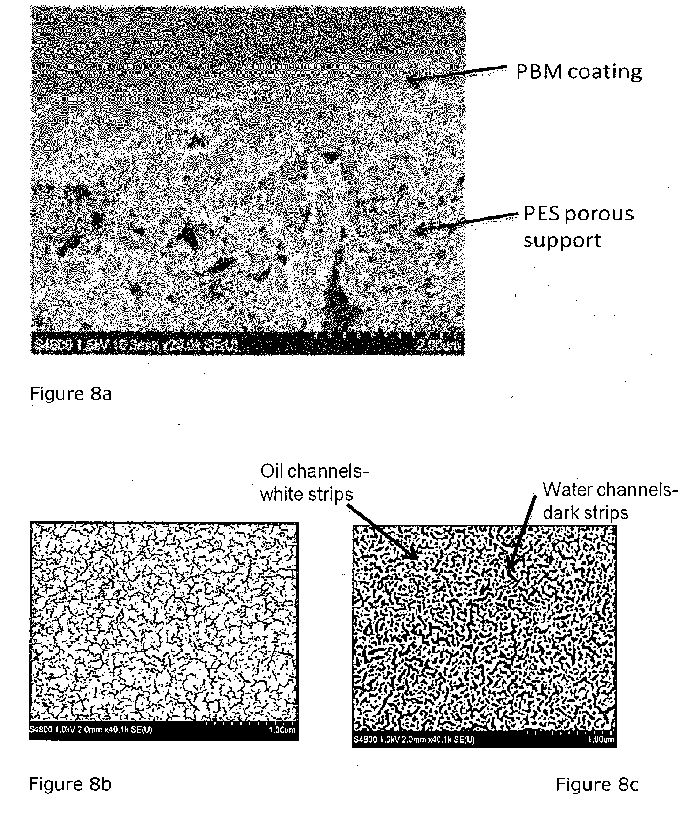

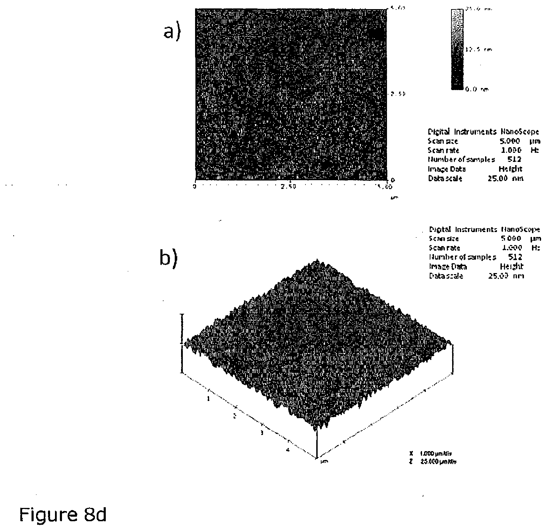

SEM (Scanning Electron Microscopy) and AFM (Atomic Force Microscopy) analyses of commercial PES and coated PBM membranes allowed to study membrane morphology and they are showed in figures 8a-8e.

From SEM, the addition of PBM layer permeated the membrane of 1.25 to 2.5 µm (Figure 8a). From picture 8b and 8c the surface of PES and PBM coated membranes are compared. As it can be seen from picture 8c, PBM membranes presented a typical structure made up of an interconnected network of polymer channels (white strips) and water channels (dark strips).

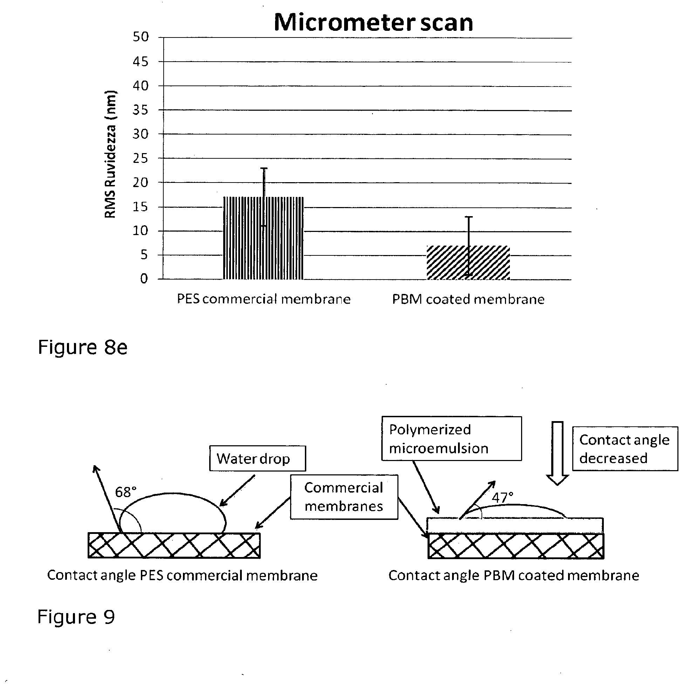

Furthermore the addition of PBM layer leads to a reduction in the measured surface RMS roughness from 17 nm (for PES membrane) to 7 nm (for PBM membrane) (Figure 8d and 8e) as proved by AFM analyses.

The polymerized microemulsion coating impart to the membrane a more hydrophilic character (Figure 9). The result is that the microemulsion coated membrane surface reduces the rate of adsorption of organic matter present in the feed water. Consequently membranes with a more hydrophilic surface can operate at higher flux rate. In fact the contact angle decreases from 68° for uncoated PES commercial membrane to about 47° for the same type of PES membrane coated with polymerized microemulsion according to the invention.

Preliminary characterization tests were carried out in order to study the performances of prepared coated membranes according to the invention and to compare them with the uncoated ones.

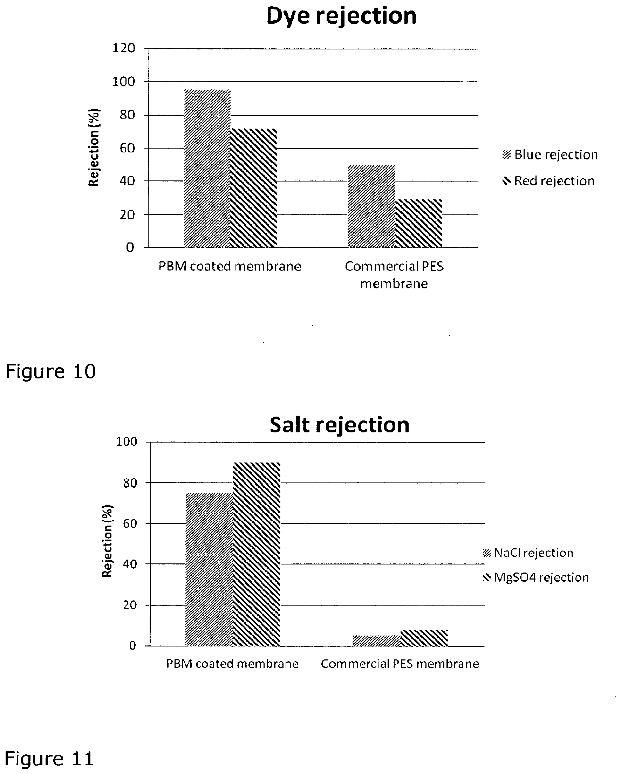

Salt rejection tests, see fig. 10, with NaCl and MgSO₄ proved the "dense" nature of the prepared membranes with small pore size as a consequence of the high salts rejection. A solution containing about 500 ppm of NaCl was filtered with the coated membranes according to the invention and a comparison with the uncoated membrane. About 75% of NaCl was rejected by the coated membrane in comparison to the about 5% for uncoated membrane. The result was much better with filtering of a solution containing 2000 ppm of MgSO₄. Almost, 90% of the ions deriving from MgSO₄ were rejected by the coated membrane in comparison to the about 8% for uncoated membrane.

Two model dye compounds, Remazol Brilliant Blue R shown on the left and Acid Red 4 shown on the right, were used to evaluate membrane colour rejection, see fig. 11. Membrane tests were conducted in 3 different bench-scale units 1) Auto-controlled UF cross-flow testing cell 2) Manually controlled UF cross-flow testing cell, 3) Submerged MBR. The result data have been reported in the Table 3.

| **Testing unit** | **Process parameters** | **Tested Membranes** | | **Benefits of PBM over Com.** |
|---|---|---|---|---|
| | | PBM | Commercial | |
| LSta80 | WP-DI water (L/m2.h.bar) | 200 (PBM 4) | 600 | |
| | WP-HA (L/m2.h.bar) | 120 (PBM4) | 120 | More or less the same with humic acid test |
| | WP-Gained (%) | 44-58 (PBM4) | 11 | 33-47% higher WP recovery in model foulant test |
| OSMOTA Submerged MBR | WP-DI water (L/m2.h.bar) | 192 (PBM2) | 275 | |
| | WP-MTDW (L/m2.h.bar) | 100 (PBM2) | 107 | More or less the same with model textile dye wastewater |
| | Red dye rejections (%) | 20-30 | 18 | apprx. 10% higher red rejections |
| | Blue dye rejections (%) | 30-40 | 25 | apprx. 15% higher blue rejections |
| | Red dye rejections (%) | 30-40 | 20-30 | apprx. 20% higher red rejections |
| | Blue dye rejections (%) | 40-60 | 30-40 | apprx. 25% higher blue rejections |
| | COD removal efficiency (%) | 97 | 90 | About 7% higher COD rejections |
| | Anti-fouling effects | High | Low | Higher anti-fouling effects |
| | Anti-microbial effects | High | No | Limited biofouling due to anti-microbial effects which was revealed in 6 months experimental studies |

Commercial ultrafiltrations (UF) membrane with an active membrane of polyethersulfone (PES) provided by Microdyn-Nadir (MN) were coated with polymerisable bicontinuous microemulsion according to the invention.

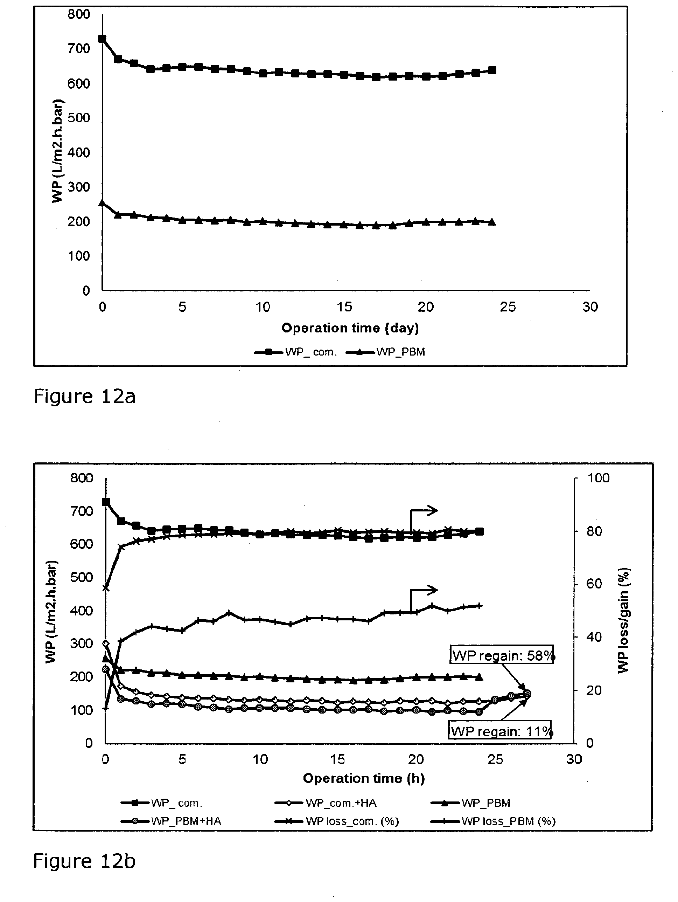

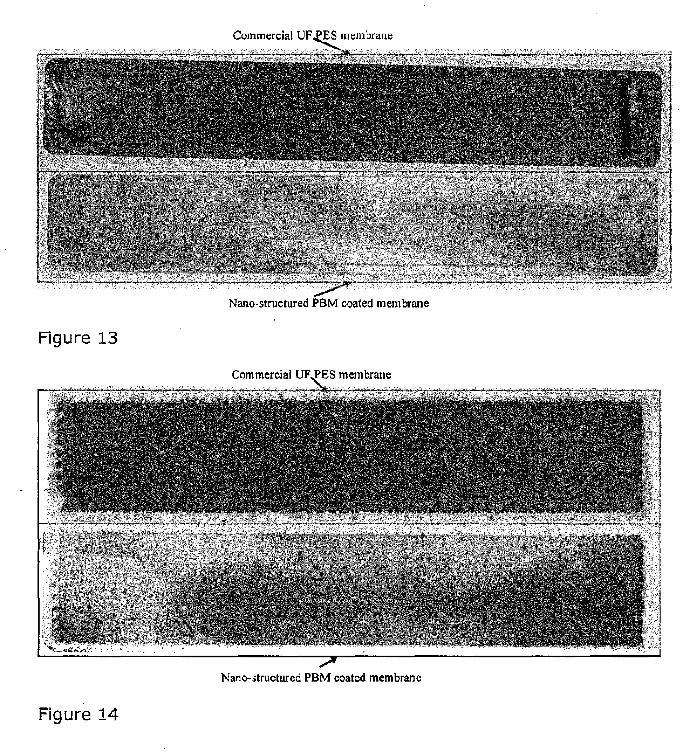

In the model foulant test the Water permeability (WP) in L/m².h.bar of the PBM membrane was measured under the following test conditions: DI water, conductivity: 60µS/cm, pH: 6.5-7, Temp.: 20±2°C, TMP: 0.5 bar
Foulant water WP-HA,
Model textile dye wastewater WP-MTDW,
The water permeability (WPs) of PBM membranes are close to that of commercial UF PES membranes with model foulant or model textile dye wastewater
PBM membrane shows 33-47% higher WP regained with model foulant test i.e. PBM membranes are less prone to fouling (see Fig.12a, Fig. 12b and Fig.13).

PBM membrane shows 10-25% higher textile dye rejections and 5-7% higher COD rejections compared to UF PES membrane, COD means Chemical Oxygen Demand and is an indication of the total organic pollution of the water.

Textiles dyes have less affinity to be attached to PBM membrane compared to the commercial one (Fig. 14).

PBM membrane has low biofouling due to anti-microbial effects and in PBM membranes nanofillers can be bound to the surfactant which improves the antifouling properties. Advantageously the membrane according to the invention show less cleaning effort, better membrane durability, taylor-made active and/or reactive coating useful for catalytic oxidation in removal of organic fouling layers

After analyzing all the results of the MBR field trials with real field textile wastewater, olive mill wastewater and cosmetic wastewater, it is concluded that the different experiments performed have several benefits towards PBM coated MBR over commercial MBR modules. The trial with textile wastewater indicates the benefits of flux increment compared to commercial one. By changing in flux from standard (commercial) to the modified (PBM coated membranes), the cost reduction in chemicals for cleaning annually goes down by 31 % because of stability of flux and reduced fouling. Subsequently annual cost as well as investment cost goes down by 26% and 20 % respectively while the cost of operation (energy, chemicals) by 32 %. Hence it becomes evident that PBM coated membranes can be quite beneficial to be operated on an industrial scale based on the pilot trial findings.

The MBR trial with olive mill wastewater indicates that PBM coated MBR shows 13% higher COD removal efficiency compared to the commercial one. The TMP jump of commercial MBR module reached to very high (450 mbar) compared to PBM coated MBR (300 mbar) for the same water flux of 3.5 L/m².h indicating less fouling propensity of PBM coated MBR module. It suggests also that the PBM coated MBR module requires less cleaning frequency meaning highly antifouling which is economically viable for the application of MBRs in real field

The experiment with cosmetic wastewater shows that the COD removal efficiency of PBM coated MBR with flux of 2.5 to 3 L/m².h is around 87% where the commercial MBR module with flux of 4 L/m².h shows around 70% COD removal efficiency indicating that PBM module has 17% higher COD removal efficiency though the flux values of both modules need to be considered. This suggests that PBM coated module shows better performance in terms of better permeate quality which is also in favor in MBRs application in cosmetic wastewater treatment.

Generally, all the results found from MBR trials with textile wastewater, olive mill wastewater and cosmetic wastewater conclude that the PBM coated module has lot of benefits over the commercial one and the pilot trail findings positively suggest to scale up to MBRs to be applied in overall industrial wastewater treatment.

In fact, an alternative strategy of synthesis is the adsorption of nano particles as functionalized carbon nano tube on the surface of the coating after the of polymerization, (after membrane coating) that is an efficient deposit on with suitably functionalized CNTs containing hydrophobic chemical group along the tube.

## Claims

1. A hydrophilic and antimicrobial flat membrane comprising:
• a polymeric membrane, and
• a polymerized coating thereof obtained by polymerization of a cast layer of a polymerisable bicontinuous microemulsion,
wherein the polymerisable bicontinuous microemulsion comprises a oil phase monomer, a surfactant, a co-surfactant, water, a cross-linker and an initiator;
**characterized in that**
the surfactant is one or more surfactants of general formula 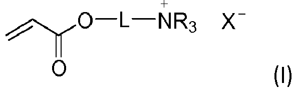 wherein:
L is a carbon chain (CH₂)*ₙ* linker with n ranging from 2 to 20;
R is an alkyl group;
X is Cl, Br or I or a mixture of halogens,
wherein the polymeric membrane is selected from the group consisting of polyamide (PA), polyethersulphone (PES), polyvinylchloride (PVC), polyetheretherketone (PEEK), polysulphone (PS), polyethylene terephthalate (PET) and polyvinylidene fluoride (PVDF),
wherein the oil phase monomer of the polymerized coating of a polymerisable bicontinuous microemulsion is selected from the group of organic monomers able to undergo radical polymerization, namely styrene, acrylonitrile, or acrylates, and
wherein hydrophilicity of the membrane surfaces can be expressed in terms of a water (liquid) contact angle θ being in the range of 0°<θ<90°.

2. The membrane of claim 1 , wherein the surfactant is selected from the compound of formula (I) wherein the carbon chain linker (CH₂)*ₙ* and *n* = 11, and R is an ethyl; preferably the surfactant is acryloyloxyundecyltriethylammonium bromide surfactant (AUTEAB) of formula:

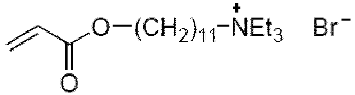

3. The membrane of claim 1 - 2, wherein the polymeric membrane is polyethersulphone (PES).

4. The membrane of claims 1 - 3, wherein the oil phase monomer of the polymerized coating of a polymerisable bicontinuous microemulsion is methyl methacrylate (MMA).

5. The membrane of claims 1 to 4, wherein:
• the co-surfactant is a an organic monomer able to undergo radical polymerization, functionalized with a hydrophilic functional group, preferably 2-hydroxylethyl methacrylate (HEMA),
• the cross-linker is any molecule bearing two polymerisable ends linked by an organic linker which is either hydrophobic or hydrophilic, preferably ethylene glycol dimethacrylate (EGDMA),
• and an initiator is any molecule able to act as a radical initiator such as ammoniumpersulfate (APS) and N,N,N',N'- tetramethylethylenediamine (TMEDA), azobisisobutyronitrile (AIBN), dibenzyl Ketone (DBK), 2,2-dimethoxy-2-acetophenone (DMPA), and organic peroxides, like dibenzoyl peroxide (BP).

6. The membrane of claims 1 to 5, wherein bicontinuous microemulsion structure contains 15-30 wt% cationic or zwitterionic surfactant; 10-30 wt% MMA oil phase monomer, 5-15 wt% HEMA cosurfactant; 25-60 wt% H₂O, 3-4 wt% EGDMA cross-linker and an initiators.

7. The membrane of claims 1 to 6, wherein the polymerized coating has a thickness of 0.1 to 7 µm; preferably 5 - 7 µm

8. The membrane of claims 2 to 7, wherein polymerisable bicontinuous microemulsion contains nano-particles or nano-catalysts and wherein the nano-particles or nano-catalysts are covalently bound to the AUTEAB and are selected between supramolecular functionalized organic compounds, carbon functionalised nanotubes (CNTs), functionalized cyclodextrins (CDs), calixarenes, polyoxometalates (POMs); preferably the functionalized CNTs are embedded after the membrane coating preparation that is on the surface after polymerization.

9. Method of producing an hydrophilic and antimicrobial flat membrane according to claim 1 comprising providing a polymeric membrane, and a polymerisable bicontinuous microemulsion comprising a oil phase monomer, a surfactant, a cosurfactant, water, a cross-linker and an initiators, wherein
a. the microemulsion is cast on the membrane in a chamber under nitrogen atmosphere at a temperature between 10-30 °C
b. the polymerization of the cast microemulsion occurs in nitrogen atmosphere at a temperature between 10-30 °C by using both redox and UV initiators to obtain a polymerized coating on the membrane support.
**characterized in that**:
the surfactant is one or more surfactants of general formula 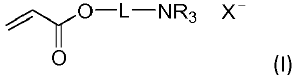 where:
L is a carbon chain (CH₂)*ₙ* linker with n ranging from 2 to 20; R is an alkyl group; X is Cl, Br or I or a mixture of halogens,
wherein the polymeric membrane is selected from the group consisting of polyamide (PA), polyethersulphone (PES), polyvinylchloride (PVC), polyetheretherketone (PEEK), polysulphone (PS), polyethylene terephthalate (PET) and polyvinylidene fluoride (PVDF),
wherein the oil phase monomer of the polymerized coating of a polymerisable bicontinuous microemulsion is selected from the group of organic monomers able to undergo radical polymerization, namely styrene, acrylonitrile, or acrylates, and
wherein hydrophilicity of the membrane surfaces can be expressed in terms of a water (liquid) contact angle θ being in the range of 0°<θ<90°.

10. The method of claim 9, wherein the surfactant is selected from the compound of formula (I) wherein the carbon chain linker L is a (CH₂)*ₙ* and *n* = 11, and R is an ethyl; preferably the surfactant is acryloyloxyundecyltriethylammonium bromide surfactant (AUTEAB) of formula:

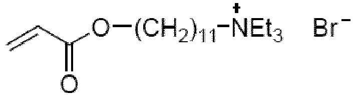

11. The method of claims 9-10, wherein the casting knife for making the polymeric membrane has a thickness of 10 - 350 µm; preferably the temperature is 20°C.

12. The method of claims 9 to 11, wherein the polymeric membrane is polyethersulphone (PES); and wherein the oil phase monomer of the polymerized coating of a polymerisable bicontinuous microemulsion is methyl methacrylate (MMA).

13. The method of claims 9 to 12,wherein:
a. the cosurfactant is an organic monomer able to undergo radical polymerization, functionalized with a hydrophilic functional group, preferably 2-hydroxylethyl methacrylate (HEMA)
b. the cross-linker is any molecule bearing two polymerasible ends linked by an organic linker either hydrophobic or hydrophilic, preferably ethylene glycol dimethacrylate (EGDMA).
c. and an initiator is any molecule able to act as a radical initiator such as ammoniumpersulfate (APS) and N,N,N',N'- tetramethylethylenediamine (TMEDA), or UV-based initiators such as zobisisobutyronitrile (AIBN), 2,2-dimethoxy-2-acetophenone (DMPA) or dibenzyl Ketone (DBK), and organic peroxides, like dibenzoyl peroxide (BP).

14. The method of claims 9 to 13, wherein
the bicontinuous microemulsion structure contains 15-30 wt% cationic surfactant; 10-30 wt% MMA oil phase monomer, 5-15 wt% HEMA cosurfactant; 25-60 wt% H₂O, 3-4 wt% EGDMA cross-linker and an initiators; and/or
the bicontinuous microemulsion further contains nano-particles or nano-catalysts and supramolecular functionalized organic compounds (such as carbon functionalised nanotubes (CNTs), functionalized cyclodextrins (CDs), calixarenes, polyoxometalates (POMs); preferably the functionalized CNTs is embedded on the polymerized bicontinuous microemulsion coating.

15. Use of a flat membrane according to claim 1-8, in water purification or in the removal of dyes and/or organic compounds and/or bio-pollutants; preferably in membrane bioreactors (MBR).

## Patentansprüche

1. Hydrophile und antimikrobielle Flachmembran, umfassend:
• eine Polymermembran und
• eine polymerisierte Beschichtung davon, erhalten durch Polymerisation einer gegossenen Schicht einer polymerisierbaren bikontinuierlichen Mikroemulsion, wobei die polymerisierbare bikontinuierliche Mikroemulsion ein Ölphasenmonomer, ein Tensid, ein Co-Tensid, Wasser, einen Vernetzer und einen Initiator umfasst; **dadurch gekennzeichnet, dass** das
Tensid ein oder mehrere Tenside der allgemeinen Formel 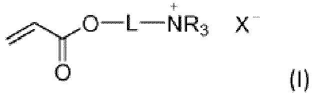 ist, wobei:
L ein Kohlenstoffketten- (CH₂)ₙ Linker ist mit n im Bereich von 2 bis 20;
R eine Alkylgruppe ist;
X Cl, Br oder I oder eine Mischung von Halogenen ist,
wobei die Polymermembran ausgewählt ist aus der Gruppe bestehend aus Polyamid (PA), Polyethersulfon (PES), Polyvinylchlorid (PVC), Polyetheretherketon (PEEK), Polysulfon (PS), Polyethylenterephthalat (PET) und Polyvinylidenfluorid (PVDF),
wobei das Ölphasenmonomer der polymerisierten Beschichtung einer polymerisierbaren bikontinuierlichen Mikroemulsion ausgewählt ist aus der Gruppe organischer Monomere, die radikalisch polymerisieren können, namentlich Styrol, Acrylnitril oder Acrylate, und
wobei die Hydrophilie der Membranoberflächen in Form eines Wasser- (flüssig) Kontaktwinkels θ in dem Bereich von 0°<θ<90° ausgedrückt werden kann.

2. Membran nach Anspruch 1, wobei das Tensid ausgewählt ist aus der Verbindung der Formel (I), wobei der Kohlenstoffketten- (CH₂)ₙ Linker und n = 11 und R Ethyl ist; vorzugsweise ist das Tensid Acryloyloxyundecyltriethylammoniumbromid-Tensid (AUTEAB) der Formel:

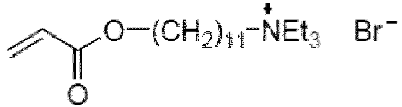

3. Membran nach Anspruch 1-2, wobei die Polymermembran Polyethersulfon (PES) ist.

4. Membran nach Ansprüchen 1-3, wobei das Ölphasenmonomer der polymerisierten Beschichtung einer polymerisierbaren bikontinuierlichen Mikroemulsion Methacrylat (MMA) ist.

5. Membran nach Ansprüchen 1-4, wobei
• das Co-Tensid ein organisches Monomer ist, das radikalisch polymerisieren kann, funktionalisiert mit einer hydrophilen funktionellen Gruppe, vorzugsweise 2-Hydroxyethylmethacrylat (HEMA),
• der Vernetzer irgendein Molekül ist, das zwei polymerisierbare Enden trägt, verbunden durch einen organischen Linker, der entweder hydrophob oder hydrophil ist,
vorzugsweise Ethylenglycoldimethacrylat (EGDMA) ist,
• und ein Initiator irgendein Molekül ist, das als Radikalinitiator agieren kann, wie zum Beispiel Ammoniumpersulfat (APS) und N,N,N',N'-Tetramethylethylendiamin (TMEDA), Azobisisobutyronitril (AIBN), Dibenzylketon (DBK), 2,2-Dimethoxy-2-acetophenon (DMPA) und organische Peroxide wie Dibenzoylperoxid (BP).

6. Membran nach Ansprüchen 1 - 5, wobei die bikontinuierliche Mikroemulsionsstruktur enthält: 15-30 Gew.-% kationisches oder zwitterionisches Tensid; 10-30 Gew.-% MMA Ölphasenmonomer, 5-15 Gew.-% HEMA Co-Tensid; 25-60 Gew.-% H₂O, 3-4 Gew.-% EGDMA-Vernetzer und einen Initiatoren.

7. Membran nach Ansprüchen 1 - 6, wobei die polymerisierte Beschichtung eine Dicke von 0,1 bis 7 µm aufweist; vorzugsweise 5 - 7 µm

8. Membran nach Ansprüchen 2 - 7, wobei die polymerisierbare bikontinuierliche Mikroemulsionsstruktur Nanopartikel oder Nanokatalysatoren enthält und wobei die Nanopartikel oder Nanokatalysatoren kovalent an das AUTEAB gebunden sind und ausgewählt sind aus supramolekular funktionalisierten organischen Verbindungen, kohlenstofffunktionalisierten Nanoröhren (CNTs), funktionalisierten Cyclodextrinen (CDs), Calixarenen, Polyoxometallaten (POMs); vorzugsweise werden die funktionalisierten CNTs nach der Membranbeschichtungsherstellung eingebettet, die sich nach der Polymerisation auf der Oberfläche befindet.

9. Verfahren zur Herstellung einer hydrophilen und antimikrobiellen Flachmembran nach Anspruch 1, umfassend das Bereitstellen einer Polymermembran und einer polymerisierbaren bikontinuierlichen Mikroemulsion, umfassend ein Ölphasenmonomer, ein Tensid, ein Co-Tensid, Wasser, einen Vernetzer und einen Initiatoren, wobei
a. die Mikroemulsion in einer Kammer unter Stickstoffatmosphäre bei einer Temperatur zwischen 10-30 °C auf die Membran gegossen wird
b. die Polymerisation der gegossenen Mikroemulsion in einer Stickstoffatmosphäre bei einer Temperatur zwischen 10-30 °C unter Verwendung von Redox- und UV-Initiatoren erfolgt, um eine polymerisierte Beschichtung auf dem Membranträger zu erhalten.
**dadurch gekennzeichnet, dass** das Tensid ein oder mehrere Tenside der allgemeinen Formel 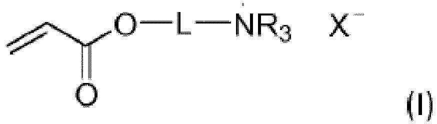 ist, wobei
L ein Kohlenstoffketten- (CH₂)ₙ Linker ist mit n im Bereich von 2 bis 20;
R eine Alkylgruppe ist;
X Cl, Br oder I oder eine Mischung von Halogenen ist,
wobei die Polymermembran ausgewählt ist aus der Gruppe bestehend aus Polyamid (PA), Polyethersulfon (PES), Polyvinylchlorid (PVC), Polyetheretherketon (PEEK), Polysulfon (PS), Polyethylenterephthalat (PET) und Polyvinylidenfluorid (PVDF),
wobei das Ölphasenmonomer der polymerisierten Beschichtung einer polymerisierbaren bikontinuierlichen Mikroemulsion ausgewählt ist aus der Gruppe organischer Monomere, die radikalisch polymerisieren können, namentlich Styrol, Acrylnitril oder Acrylate, und
wobei die Hydrophilie der Membranoberflächen in Form eines Wasser- (flüssig) Kontaktwinkels θ in dem Bereich von 0°<θ<90° ausgedrückt werden kann.

10. Verfahren nach Anspruch 9, wobei das Tensid ausgewählt ist aus der Verbindung der Formel (I), wobei der Kohlenstoffkettenlinker L (CH₂)ₙ und n = 11 ist und R Ethyl ist; vorzugsweise ist das Tensid Acryloyloxyundecyltriethylammoniumbromid-Tensid (AUTEAB) der Formel:

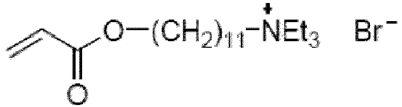

11. Verfahren nach Ansprüchen 9-10, wobei das Gussmesser zum Herstellen der Polymermembran eine Dicke von 10 - 350 µm aufweist; vorzugsweise die Temperatur 20 °C beträgt.

12. Verfahren nach Ansprüchen 9 bis 11, wobei die Polymermembran Polyethersulfon (PES) ist; und wobei das Ölphasenmonomer der polymerisierten Beschichtung einer polymerisierbaren bikontinuierlichen Mikroemulsion Methacrylat (MMA) ist.

13. Verfahren nach Ansprüchen 9 bis 12, wobei
a. das Co-Tensid ein organisches Monomer ist, das radikalisch polymerisieren kann, funktionalisiert mit einer hydrophilen funktionellen Gruppe, vorzugsweise 2-Hydroxyethylmethacrylat (HEMA),
b. der Vernetzer irgendein Molekül ist, das zwei polymerisierbare Enden trägt, verbunden durch einen organischen Linker, der entweder hydrophob oder hydrophil ist, vorzugsweise Ethylenglycoldimethacrylat (EGDMA).
c. und ein Initiator irgendein Molekül ist, das als Radikalinitiator agieren kann, wie zum Beispiel Ammoniumpersulfat (APS) und N,N,N',N'-Tetramethylethylendiamin (TMEDA) oder UV-basierte Initiatoren wie zum Beispiel Azobisisobutyronitril (AIBN), 2,2-Dimethoxy-2-acetophenon (DMPA), Dibenzylketon (DBK) und organische Peroxide wie Dibenzoylperoxid (BP).

14. Verfahren nach Ansprüchen 9 bis 13, wobei
die bikontinuierliche Mikroemulsionsstruktur enthält: 15-30 Gew.-% kationisches Tensid; 10-30 Gew.-% MMA Ölphasenmonomer, 5-15 Gew.-% HEMA Co-Tensid; 25-60 Gew.-% H₂O, 3-4 Gew.-% EGDMA-Vernetzer und einen Initiatoren; und/oder die bikontinuierliche Mikroemulsionsstruktur enthält ferner Nanopartikel oder Nanokatalysatoren und supramolekular funktionalisierte organische Verbindungen (wie zum Beispiel kohlenstofffunktionalisierte Nanoröhren (CNTs), funktionalisierte Cyclodextrine (CDs), Calixarene, Polyoxometallate (POMs); vorzugsweise werden die funktionalisierten CNTs auf der polymerisierten bikontinuierlichen Mikroemulsionsbeschichtung eingebettet.

15. Verwendung einer Flachmembran nach Anspruch 1-8 in der Wasserreinigung oder Entfernung von Farbstoffen und/oder organischer Verbindungen und/oder Bioverschmutzungen; vorzugsweise in Membranbioreaktoren (MBR).

## Revendications

1. Membrane plate hydrophile et antimicrobienne comprenant :
• une membrane polymère, et
• un revêtement polymérisé de celle-ci obtenu par polymérisation d'une couche coulée d'une microémulsion bicontinue polymérisable,
dans laquelle la microémulsion bicontinue polymérisable comprend un monomère en phase huileuse, un tensioactif, un co-tensioactif, de l'eau, un agent de réticulation et un initiateur ;
**caractérisée en ce que**
le tensioactif est un ou plusieurs tensioactifs de formule générale 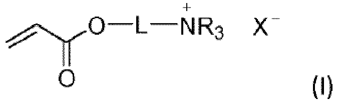 où :
L est un lieur à chaîne carbonée (CH₂)*ₙ* où *n* est situé dans la plage allant de 2 à 20 ;
R est un groupe alkyle ;
X est Cl, Br ou I ou un mélange d'halogènes,
dans laquelle la membrane polymère est choisie dans l'ensemble constitué par le polyamide (PA), la poly-éthersulfone (PES), le poly(chlorure de vinyle) (PVC), la polyéther-éthercétone (PEEK), la polysulfone (PS), le poly(téréphtalate d'éthylène) (PET) et le poly(fluorure de vinylidène) (PVDF),
dans laquelle le monomère en phase huileuse du revêtement polymérisé d'une microémulsion bicontinue polymérisable est choisi dans l'ensemble des monomères organiques capables de subir une polymérisation radicalaire, à savoir le styrène, l'acrylonitrile ou les acrylates, et
dans laquelle le caractère hydrophile des surfaces de membrane peut être exprimé en termes d'angle de contact avec l'eau (liquide) ▪ situé dans la plage 0° < ▪ < 90°.

2. Membrane selon la revendication 1, dans laquelle le tensioactif est choisi parmi les composés de formule (I) où le lieur à chaîne carbonée est (CH₂)*ₙ* et *n* = 11, et R est un éthyle ; de préférence le tensioactif est le tensioactif bromure d'acryloyloxyundécyl-triéthylammonium (AUTEAB) de formule :

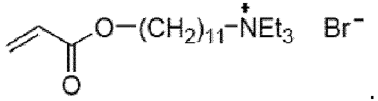

3. Membrane selon les revendications 1 et 2, dans laquelle la membrane polymère est en polyéthersulfone (PES).

4. Membrane selon les revendications 1 à 3, dans laquelle le monomère en phase huileuse du revêtement polymérisé d'une microémulsion bicontinue polymérisable est le méthacrylate de méthyle (MMA).

5. Membrane selon les revendications 1 à 4, dans laquelle :
• le co-tensioactif est un monomère organique capable de subir une polymérisation radicalaire, fonctionnalisé avec un groupe fonctionnel hydrophile, de préférence le méthacrylate de 2-hydroxyéthyle (HEMA),
• l'agent de réticulation est n'importe quelle molécule portant deux extrémités polymérisables liées par un lieur organique qui est soit hydrophobe soit hydrophile, de préférence le diméthacrylate d'éthylèneglycol (EGDMA), et
• un initiateur est n'importe quelle molécule capable d'agir en tant qu'initiateur radicalaire telle que le persulfate d'ammonium (APS) et la N,N,N',N'-tétraméthyl-éthylènediamine (TMEDA), l'azobisisobutyronitrile (AIBN), la dibenzylcétone (DBK), la 2,2-diméthoxy-2-acétophénone (DMPA), et les peroxydes organiques, tels que le peroxyde de dibenzoyle (BP).

6. Membrane selon les revendications 1 à 5, dans laquelle la structure en microémulsion bicontinue contient 15 à 30 % en poids de tensioactif cationique ou zwittérionique ; 10 à 30 % en poids de monomère en phase huileuse de MMA, 5 à 15 % en poids de co-tensioactif HEMA ; 25 à 60 % en poids de H₂O, 3 à 4 % en poids d'agent de réticulation EGDMA et d'un initiateur.

7. Membrane selon les revendications 1 à 6, dans laquelle le revêtement polymérisé a une épaisseur de 0,1 à 7 µm ; de préférence de 5 à 7 µm.

8. Membrane selon les revendications 2 à 7, dans laquelle la microémulsion bicontinue polymérisable contient des nanoparticules ou des nanocatalyseurs et dans laquelle les nanoparticules ou les nanocatalyseurs sont liés de manière covalente à l'AUTEAB et sont choisis parmi les composés organiques fonctionnalisés supramoléculaires, les nanotubes de carbone fonctionnalisés (CNT), les cyclo-dextrines fonctionnalisées (CD), les calixarènes, les poly-oxométallates (POM) ; de préférence les CNT fonctionnalisés sont incorporés après la préparation de revêtement de membrane qui est sur la surface après polymérisation.

9. Procédé de production d'une membrane plate hydrophile et antimicrobienne selon la revendication 1, comprenant l'opération consistant à disposer d'une membrane polymère, et d'une microémulsion bicontinue polymérisable comprenant un monomère en phase huileuse, un tensioactif, un co-tensioactif, de l'eau, un agent de réticulation et un initiateur, où
a. la microémulsion est coulée sur la membrane dans une chambre dans une atmosphère d'azote à une température entre 10 et 30°C,
b. la polymérisation de la microémulsion coulée a lieu dans une atmosphère d'azote à une température entre 10 et 30°C par utilisation d'initiateurs tant redox qu'UV pour que soit obtenu un revêtement polymérisé sur le support de membrane,
**caractérisé en ce que** :
le tensioactif est un ou plusieurs tensioactifs de formule générale 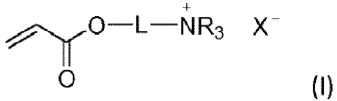 où :
L est un lieur à chaîne carbonée (CH₂)*ₙ* où *n* est situé dans la plage allant de 2 à 20 ; R est un groupe alkyle ; X est Cl, Br ou I ou un mélange d'halogènes,
dans lequel la membrane polymère est choisie dans l'ensemble constitué par le polyamide (PA), la poly-éthersulfone (PES), le poly(chlorure de vinyle) (PVC), la polyéther-éthercétone (PEEK), la polysulfone (PS), le poly-(téréphtalate d'éthylène) (PET) et le poly(fluorure de vinylidène) (PVDF),
dans lequel le monomère en phase huileuse du revêtement polymérisé d'une microémulsion bicontinue polymérisable est choisi dans l'ensemble des monomères organiques capables de subir une polymérisation radicalaire, à savoir le styrène, l'acrylonitrile ou les acrylates, et
dans lequel le caractère hydrophile des surfaces de membrane peut être exprimé en termes d'angle de contact avec l'eau (liquide) ▪ situé dans la plage 0° < ▪ < 90°.

10. Procédé selon la revendication 9, dans lequel le tensioactif est choisi parmi les composés de formule (I) où le lieur à chaîne carbonée L est (CH₂)*ₙ* et *n* = 11, et R est un éthyle ; de préférence le tensioactif est le tensioactif bromure d'acryloyloxyundécyl-triéthylammonium (AUTEAB) de formule :

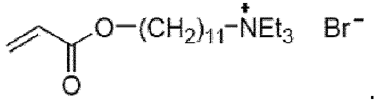

11. Procédé selon les revendications 9 et 10, dans lequel le couteau de coulée pour préparer la membrane polymère a une épaisseur de 10 à 350 µm ; de préférence la température est de 20°C.

12. Procédé selon les revendications 9 à 11, dans lequel la membrane polymère est en polyéthersulfone (PES) ; et dans lequel le monomère en phase huileuse du revêtement polymérisé d'une microémulsion bicontinue polymérisable est le méthacrylate de méthyle (MMA).

13. Procédé selon les revendications 9 à 12, dans lequel :
a. le co-tensioactif est un monomère organique capable de subir une polymérisation radicalaire, fonctionnalisé avec un groupe fonctionnel hydrophile, de préférence le méthacrylate de 2-hydroxyéthyle (HEMA),
b. l'agent de réticulation est n'importe quelle molécule portant deux extrémités polymérisables liées par un lieur organique qui est soit hydrophobe soit hydrophile, de préférence le diméthacrylate d'éthylèneglycol (EGDMA), et
c. un initiateur est n'importe quelle molécule capable d'agir en tant qu'initiateur radicalaire telle que le persulfate d'ammonium (APS) et la N,N,N',N'-tétraméthyl-éthylènediamine (TMEDA), ou un initiateur basé sur les UV tel que l'azobisisobutyronitrile (AIBN), la 2,2-diméthoxy-2-acétophénone (DMPA) ou la dibenzylcétone (DBK), et les peroxydes organiques, comme le peroxyde de dibenzoyle (BP).

14. Procédé selon les revendications 9 à 13, dans lequel
la structure en microémulsion bicontinue contient 15 à 30 % en poids de tensioactif cationique ; 10 à 30 % en poids de monomère en phase huileuse de MMA, 5 à 15 % en poids de co-tensioactif HEMA ; 25 à 60 % en poids de H₂O, 3 à 4 % en poids d'agent de réticulation EGDMA et d'un initiateur ; et/ou
la microémulsion bicontinue contient en outre des nanoparticules ou des nanocatalyseurs et des composés organiques fonctionnalisés supramoléculaires (tels que des nanotubes de carbone fonctionnalisés (CNT), des cyclo-dextrines fonctionnalisées (CD), des calixarènes, des poly-oxométallates (POM)) ; de préférence les CNT fonctionnalisés sont incorporés sur le revêtement en microémulsion bicontinue polymérisée.

15. Utilisation d'une membrane plate selon les revendications 1 à 8 dans la purification de l'eau ou dans l'élimination des colorants et/ou des composés organiques et/ou des bio-polluants ; de préférence dans des bioréacteurs à membrane (MBR).
